Europäisches Patentamt

European Patent Office

Office européen des brevets

(19)

(11) Veröffentlichungsnummer : **0 074 930**
**B1**

(12) **EUROPÄISCHE PATENTSCHRIFT**

(45) Veröffentlichungstag der Patentschrift :
**02.01.86**

(51) Int. Cl.⁴ : **B 23 F   5/06**

(21) Anmeldenummer : **82810386.1**

(22) Anmeldetag : **14.09.82**

(54) **Wälzverfahren zur spangebenden Bearbeitung evolventenförmiger Zahnflanken mit Profil- und Längskorrekturen.**

(30) Priorität : **14.09.81 CH 5921/81**

(43) Veröffentlichungstag der Anmeldung :
**23.03.83 Patentblatt 83/12**

(45) Bekanntmachung des Hinweises auf die Patenterteilung : **02.01.86 Patentblatt 86/01**

(84) Benannte Vertragsstaaten :
**CH DE FR GB IT LI NL SE**

(56) Entgegenhaltungen :
**CH-A-   529 604**
**DE-B- 1 552 792**
**DE-B- 2 029 359**
**DE-B- 2 307 493**
**DE-B- 2 324 683**
**DE-C- 1 230 650**

(73) Patentinhaber : **Maag-Zahnräder und -Maschinen Aktiengesellschaft**
**Hardstrasse 219**
**CH-8023 Zürich (CH)**

(72) Erfinder : **Bloch, Peter, Dr.**
**Sonnenbergstrasse 4**
**CH-8968 Mutschellen (CH)**
Erfinder : **Wydler, Robert, Dipl.-Ing.**
**Trottenstrasse 55**
**CH-8037 Zürich (CH)**

(74) Vertreter : **Travnicek, Richard**
**c/o MAAG-Zahnräder & -Maschinen Aktiengesellschaft Hardstrasse 219 Postfach**
**CH-8023 Zürich (CH)**

EP 0 074 930 B1

## Beschreibung

Die Erfindung betrifft ein Wälzverfahren zur spangebenden Bearbeitung evolventenförmiger Zahnflanken mit Profil- und Längskorrekturen auf einer Maschine mit einem oder zwei Werkzeugen, die teller-, kegel- oder doppelkegelförmig ausgebildet, längs der Zahnflanken hubweise hin- und herbewegbar sowie in Richtung der Zahnflanken zustellbar sind und an einer oder zwei Arbeitsstellen auf je eine Zahnflanke einwirken.

Evolventenförmige Zahnflanken wurden bisher entweder mit profilierter Formschleifscheibe im Einzelteilverfahren, mit teller- oder kegelförmigen Schleifscheiben im Teilwälzverfahren oder mit Schleifschnecken im kontinuierlichen Verfahren geschliffen. Analoge Verfahren lassen sich auch mit entsprechend gestalteten Fräsern durchführen.

Es ist eine horizontalachsige Schleifmaschine bekannt (DE-PS 1 230 650), die mit zwei tellerförmigen Schleifscheiben arbeitet und das Schleifen von Profil- und Längskorekturen gestattet. Die Erzeugung der Evolvente geschieht durch eine Wälzbewegung um den Grundkreis der Verzahnung (MAAG-0°-Verfahren).

Für grössere Werkstückabmessungen sind Zahnflankenschleifmaschinen mit vertikaler Werkstückachse gebräuchlich, die entweder mit einer kegelförmigen Schleifscheibe arbeiten (DE-AS 1 552 792 und DE-AS 2 029 359) oder mit zwei tellerförmigen Schleifscheiben (MAAG-15°/20°-Verfahren, CH-PS 529 604 und DE-PS 2 050 946).

Bei den mit kegeliger Schleifscheibe ausgerüsteten Schleifmaschinen führt ein Schleifsupport auf einem Drehteil, das auf den gewünschten Schrägungswinkel einstellbar ist, eine oszillierende Bewegung in Zahnrichtung aus. Das Werkstück ist auf einem Rundtisch befestigt und wird an dem durch die kegelförmige Schleifscheibe gebildeten Bezugsprofil der Verzahnung abgewälzt, wodurch die gewünschte Evolventenform entsteht. Profilkorrekturen (Kopf- und Fussrücknahme) werden durch eine spezielle Profilierung der kegelförmigen Schleifscheibe bewirkt und Längskorrekturen werden durch radiale Zustellung der Schleifscheibe zum Werkstück erzeugt (Prospekt der Firma Dr.-Ing. Höfler Maschinen- und Messgerätebau « Höfler Zahnrad-Schleifmaschinen H 500 bis H 1 000 »).

Beim Schleifen im 15°/20°-Verfahren mit zwei tellerförmigen Schleifscheiben wird das Bezugsprofil der Verzahnung durch die von den Schleifscheibenrändern bestimmten Ebenen dargestellt (MAAG-Taschenbuch, S.258). Ein Stössel mit zwei Schleifsupporten ist an einem auf den gewünschten Schrägungswinkel einstellbaren Drehteil hin- und herbewegbar. Das Werkstück wird auch hier wie bei dem Schleifverfahren mit Kegelscheibe zur Erzeugung der Evolvente an den Schleifscheiben vorbeigewälzt. Die Eingriffsverhältnisse sind jedoch etwas komplexer als bei der Kegelscheibe. Jede der beiden tellerförmigen Schleifscheiben berührt die zu schleifende Verzahnung auf der Erzeugungsgeraden in zwei Schleifzonen. Diese Schleifzonen werden sowohl durch die Wälzbewegung wie auch durch die Hubbewegung über die Evolventenfläche bewegt. Eine Profilkorrektur ist mit bekannten Maschinen dieser Bauart nur unter erheblichem Aufwand wie z. B. durch einen zusätzlichen Schleifumlauf unter. Veränderung des Eingriffswinkels der Schleifscheiben o. ä möglich.

Der Erfindung liegt die Aufgabe zugrunde, ein Wälzverfahren gemäß Oberbegriff von Anspruch 1, umfassend die eingangs beschriebenen Gattungen derart weiterzubilden, dass Profilhorrekturen sowohl an Maschinen, die im 15°/20°-Verfahren mit einem Paar tellerförmiger Schleifscheiben oder gegebenenfalls Fräser arbeiten, ebenso einfach darstellbar sind wie auch an Maschinen mit einfach- oder doppelkegelförmigen Schleifscheiben bzw. Fräsern.

Die Aufgabe ist erfindungsgemäss dadurch gelöst, dass die zur Erzeugung der Profil- und Längskorrekturen erforderliche Verschiebung des bzw. jedes Werkzeuges für jede Arbeitsstelle ($S_a$ und $S_i$, Koordinaten $g_a$, $h_a$, $g_i$, $h_i$) im Eingriffsfeld der Verzahnung vorgegeben und abhängig von der Wälzstellung und der Hubstellung der Werkzeugmaschine nach folgenden Formeln gesteuert wird :

$$s_a : g_a = g^* - Q_4 \cdot \sin\beta_b$$
$$h_a = h^* + Q_4 \cdot \cos\beta_b$$

$$s_i : g_i = g^* + Q_3 \cdot \sin\beta_b$$
$$h_i = h^* - Q_3 \cdot \cos\beta_b$$

wobei

$$g^* = L_n \cdot \frac{\cos\beta \cdot \cos\alpha}{\cos\gamma} + W \cdot \frac{\cos\alpha}{\cos\gamma} - H \cdot \frac{\sin\beta \cdot \cos\alpha}{\cos\gamma}$$

$$h^* = L_n \cdot \sin\beta \cdot \cos^2\alpha - W \cdot \sin^2\alpha \cdot \tan\beta + H\left[\cos\beta + \frac{\sin^2\alpha \cdot \sin^2\beta}{\cos\beta}\right]$$

$$Q_4 = \sqrt{R_s^2 - \left(R_s - \frac{h_{aos}}{\cos\alpha} + y\right)^2 \cdot \cos^2\gamma} + \left(R_s - \frac{h_{aos}}{\cos\alpha} + y\right) \cdot \sin\gamma$$

$R_S$ = Radius des kreisförmigen Werkzeugrandes

$$y = \left(\frac{L_n}{\tan\beta} + \frac{W}{\sin\beta} - H\right)\tan\gamma$$

$$Q_3 = \sqrt{R_s^2 - \left(R_s - \frac{h_{aos}}{\cos\alpha} + y\right)^2 \cdot \cos^2\gamma} - \left(R_s - \frac{h_{aos}}{\cos\alpha} + y\right)\cdot\sin\gamma$$

H = Werkzeughub
$L_n$ = halbe Zahnlückenweite
W = Wälzweg
$h_{aos}$ = Zahnkopfhöhe des Werkzeugs
α = Eingrifswinkel
β = Zahnschrägungswinkel
γ = Winkel zwischen Flankenberührungs- und Fusslinie

Weiterbildungen der Erfindung sind in den Unteransprüchen beschrieben.

Ausführungsbeispiele der Erfindung werden im folgenden anhand schematischer Zeichnungen geschrieben. Es zeigen :

Figur 1 bis 9 die geometrischen Grundlagen des erfindungsgemässen Verfahrens,

Figur 10 eine Schrägansicht einer zur Durchführung des Verfahrens vorgesehenen Zahnflanken-Schleifmaschine,

Figur 11 die Vordersnicht, teilweise im senkrechten Schnitt, eines Teils der Maschine,

Figur 12 die Kinematik eines Werkzeuges auf der Maschine der fig. 10,

Figur 13 ein Eingriffsfelddiagramm

Figur 14 das Koordinatensystem der Maschine der Fig. 10

Figur 15 ein Beispiel eines im Flächeneingriff arbeitenden Werkzeuges.

Die Bedeutung der in den Zeichnungen verwendeten Kurzzeichen ist der Kurzzeichenliste am Ende der Beschreibung zu entnehmen.

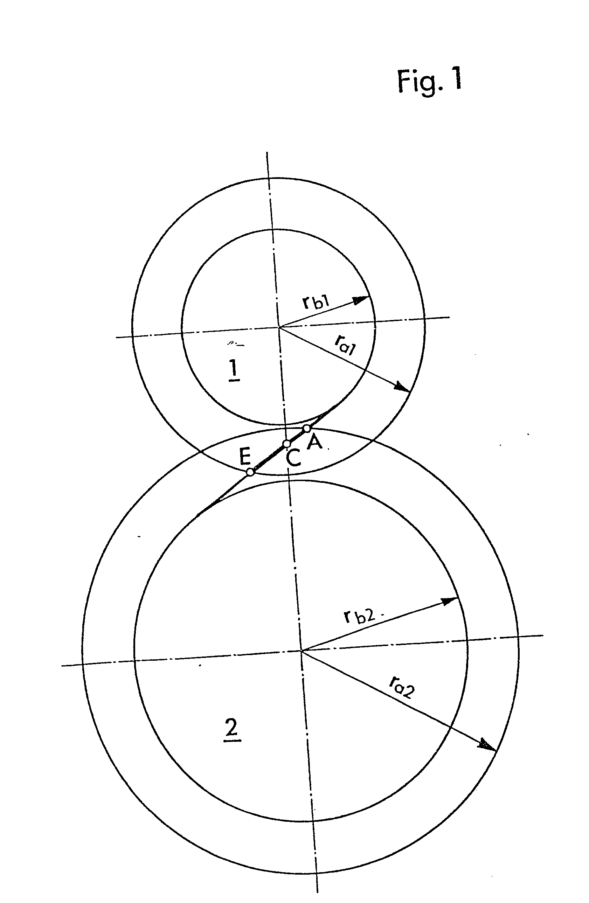

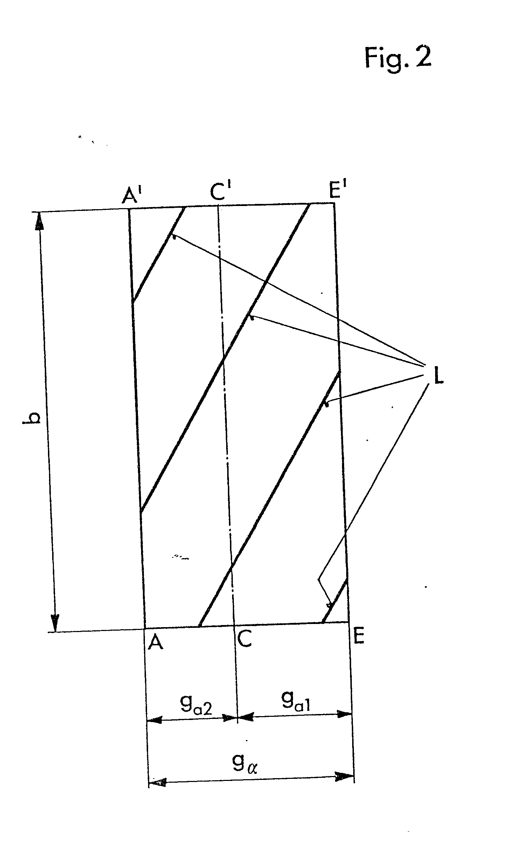

Beim Eingriff des Ritzels 1 mit dem Rad 2 einer Zahnradpaarung bewegen sich die Berührungslinien L der Zahnflanken in einer Eingriffsebene AEE'A', die in der Stirnansicht gemäss Fig. 1 als Eingriffsstrecke AE erscheint und in der Zeichenebene der Fig. 2 liegt. Bei der Festlegung von Profil- und Längskorrekturen an den Zahnflanken wird im folgenden von dieser Eingriffsebene ausgegangen.

Die Korrekturbeträge in den Punkten des Eingriffsfeldes kann man als eine topografische Verteilung über das Feld betrachten. Zu jedem Punkt dieses Feldes gehört grundsätzlich ein Korrekturbetrag, der auch Null sein kann.

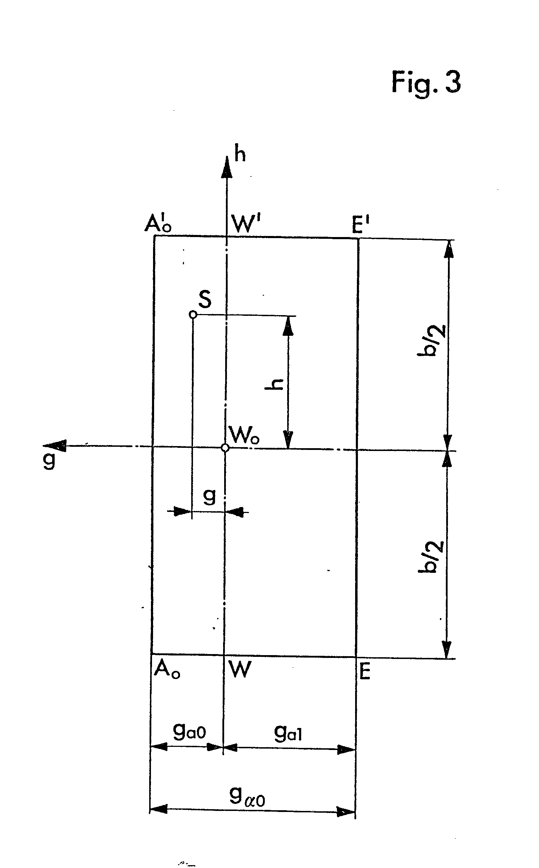

In der Erzeugungs-Eingriffsebene $A_oEE'A'_o$ wird der Koordinaten-Nullpunkt auf halber Zahnbreite b/2 auf die Erzeugungswälzachse in den Punkt $W_o$ gelegt (Fig. 3). Die Eingriffsstrecken $g_{aO}$ und $g_{aI}$ an der Werkzeugzahnstange am Ritzel 1 werden nach den bekannten Formeln der Evolventengeometrie berechnet. Das Erzeugungseingriffsfeld ist aus praktischen Gründen etwas breiter als das Radpaarungs-Eingriffsfeld $g_{ao} > g_a$. Die Länge EE' schafft die Uebereinstimmung. Die Lage eines Schleifpunktes wird mit den koordinaten g und h angegeben.

Der Erzeugung einer Evolventenfläche nach dem Wälzverfahren wird in bekannter Weise ein Werkzeug-Bezugsprofil zugrunde gelegt, das räumtich von einer Werkzeug-Bezugszahnstange verkörpert wird, an deren Teilebene sich das Werkstück abwälzt. Da spangebende Zahnradbearbeitungsmaschinen, vorallem Zahnradschleifmaschinen, in der Regel zwei arbeitende Flächen aufweisen, die auf zwei Werkzeuge, insbesondere Schleifscheiben, aufgeteilt oder in einem Werkzeug vereinigt sein können, kann man an der Werkzeug-Bezugszahnstange zwei aktive Flanken unterscheiden.

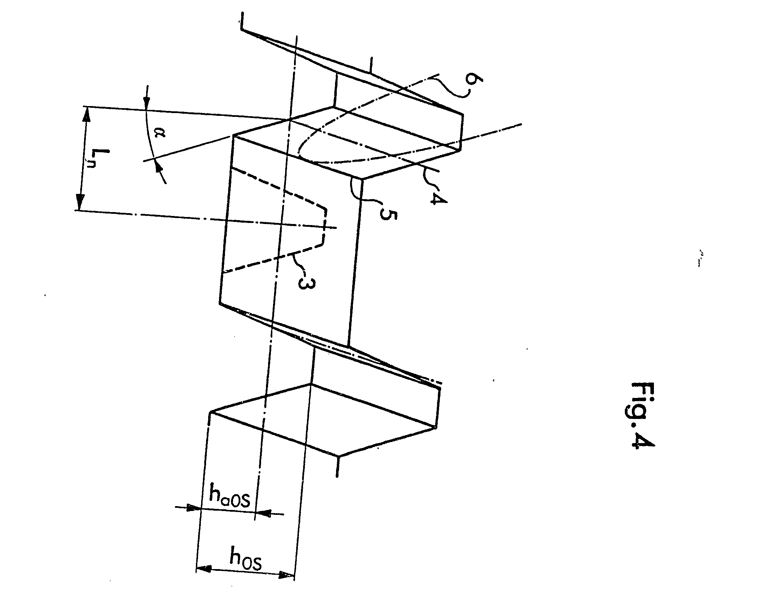

Fig. 4 zeigt grundsätzlich das Radbezugsprofil 3 im Normalschnitt, aus welchem sich das Werzeugzahnstangenprofil (Bearbeiten in zwei Lücken) als Lückenprofil ableitet. Die Werkzeugzahnstangenflanke, die senkrecht zum Werkzeugzahnstangenprofil steht, umfasst eine Teillinie 4 und eine Fusslinie 5, und zudem den Rand eines Bearbeitungswerkzeuges 6, insbesondere eine Schleifscheibe. Das Werkzeugzahnstangenprofil wird durch die folgenden Grössen festgelegt :

α = Eingriffswinkel
$L_n$ = halbe Zahnlückenweite zwischen den am Schleifen beteiligten Zahnflanken
$h_{aos}$ = Werkzeugzahnkopfhöhe (bezüglich der Berührungslinie beim Schleifen der Verzahnung)
$h_{os}$ = Werkzeugzahnhöhe (bezüglich des Schleifens der Verzahnung)

Die nachstehende Berechnung setzt voraus, dass zwei Schleifscheiben in zwei Zahnlücken eines schrägverzahnten Stirnrades arbeiten ; die Berechnung wird nur für eine Schleifscheibe durchgeführt, da die Verhältnisse für die andere Schleifscheibe wie auch für eine andere Gangrichtung der Schrägverzahnung sich durch entsprechende Vorzeichenänderungen ergeben.

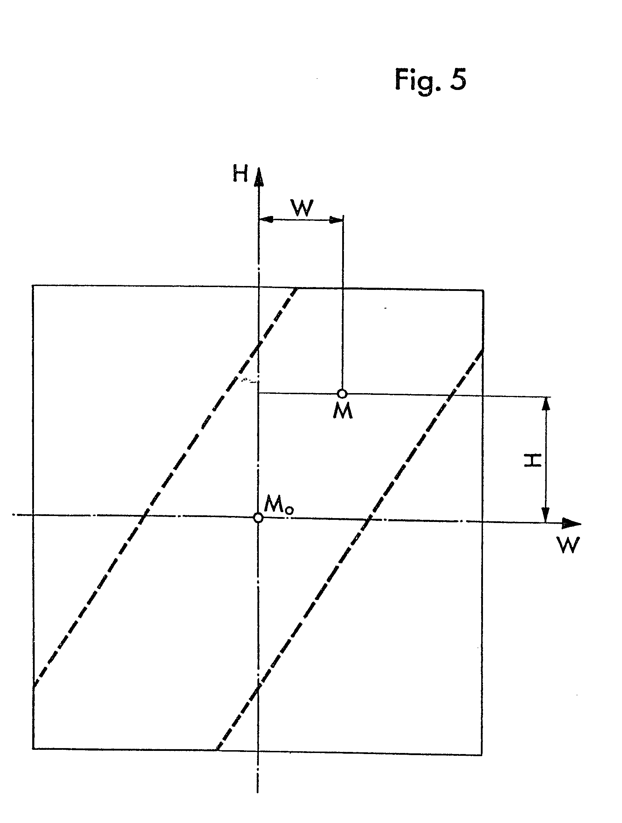

An der Schleifmaschine wird gemäss Fig. 5 der Koordinaten-Nullpunkt in bezug auf den Schleifhub H und den Wälzweg W mit Rücksicht auf rechnerische Symmetrie so gewählt, dass der Symmetriepunkt $M_o$

beider Schleifscheiben auf die Mitte der Radbreite und bei dieser Schleifhubstellung in die Mitte des Gesamtwälzweges beider Schleifscheiben fällt. Von dieser Stellung aus wird der Schleifhub nach oben mit positivem, nach unten mit negativem Vorzeichen gerechnet, der Wälzweg nach rechts mit positivem und nach links mit negativem Vorzeichen.

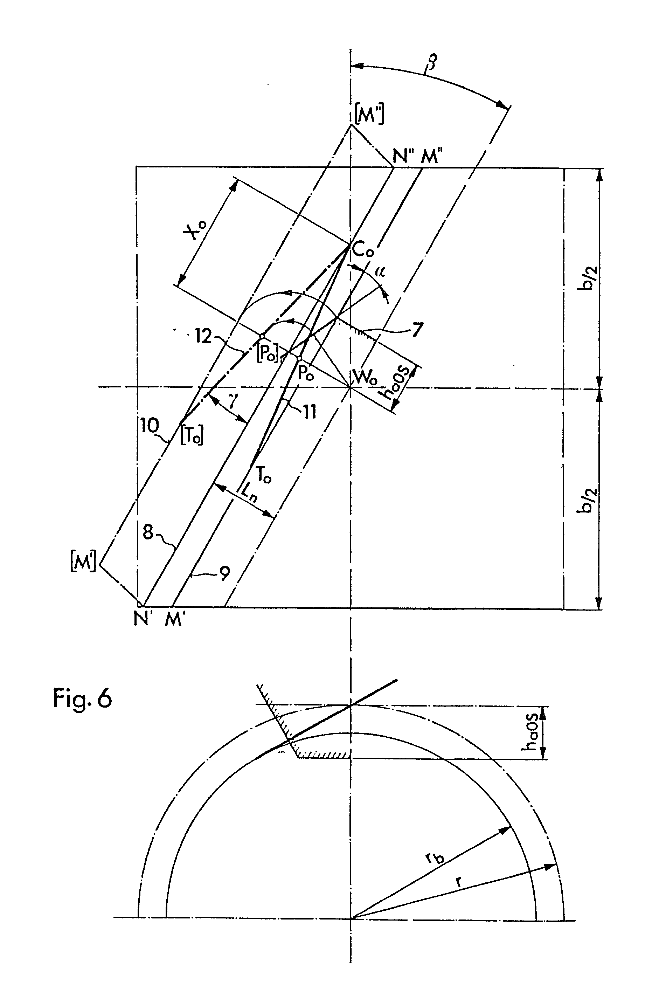

In Fig. 6 ist im Aufriss die eine Flanke der Werkzeug-Bezugszahnstange dargestellt mit dem Umriss $N'N''M''M'$. Diese Flanke liegt nicht in der Zeichenebene. Sie wird in die Zeichenebene geklappt und hat dann den Umriss $N'N''[M''][M']$. Der Ortungspunkt $P_0$ für den Schleifscheibenrad in dieser Flanke ist in der Nullstellung von Schleifhub und Wälzweg der Fusspunkt der Normalen vom Wälzpunkt $W_0$ auf die Werkzeug-Zahnstangenflanke. In einer beliebigen Wälz- und Schleifhubstellung wird der Ortungpunkt $P_0$ zum Punkt P, der anschliessend bestimmt wird. Der Mittelpunkt des kreisförmigen Randes der tellerförmigen Schleifscheibe liegt auf der Senkrechten vom Ortungspunkt P auf die Fusslinie. Der Schleifrand berührt stets diese Fusslinie.

Das Werkzeug-Zahnstangenbezugsprofil ist in dieser Figur mit 7 und die Teillinie der Werkzeugzahnstangenflanke mit 8 bezeichnet. Die Fusslinie der Werkzeugzahnstangenflanke trägt das Bezugszeichen 9 und in deren Umklappung 10. Die Flankenberührungslinie zwischen Zahnstangenflanke und Radflanke ist mit 11 und die zugehörige Umklappung mit 12 bezeichnet.

Die Berührungslinien zwischen der Flanke der Werkzeug-Bezugszahnstange und der Radflanke gehen in jeder Wälzstellung grundsätzlich durch den Ortungspunkt P. In der Wälz-Nullstellung und beim Schleifhubbetrag Null geht die Flankenberührungslinie $T_0C_0$ durch den Punkt $P_0$ und verläuft im Aufriss von $C_0$ nach $T_0$. In der Umklappung ist es der Punkt $[P_0]$ und die Flankenberührungslinie läuft von $C_0$ nach $[T_0]$.

Der Winkel zwischen der Flankenberührungslinie und der Fusslinie ist $\gamma$, wobei

$$\tan \gamma = \sin \alpha \cdot \tan \beta \tag{1}$$

$$x_0 = \frac{L_n}{\tan \beta} \tag{2}$$

$$\sin \beta_b = \sin \beta \cdot \cos \alpha \tag{3}$$

Lage des Ortungspunktes beim Wälzwegbetrag W und Schleifhubbetrag H

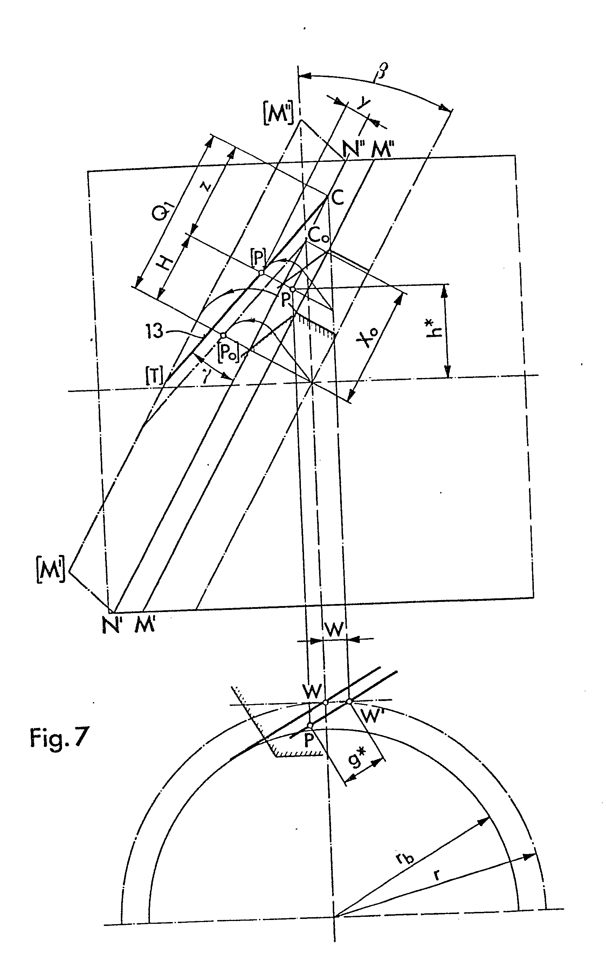

Wenn das Rad um den Wälzweg W nach rechts rollt und der Schleifhub um den Betrag H nach oben geht, verlagert sich der Ortungspunkt der Schleifscheibe in der Umklappung der Werkzeug-Bezugszahnstangenflanke von $[P_0]$ nach $[P]$. Nach Fig. 7 ist :

$$Q_1 = x_0 + \frac{W}{\sin \beta} \tag{4}$$

$$z = Q_1 - H = x_0 + \frac{W}{\sin \beta} - H \tag{5}$$

$$y = (Q_1 - H) \tan \gamma$$
$$= \left( x_0 + \frac{W}{\sin \beta} - H \right) \tan \gamma \tag{6}$$

Koordinaten des Ortungspunktes $S^*$ im Eingriffsfeld nach Fig. 3

Aus Fig. 7 mit dem Hinweis, dass die Flankenberührungslinie eine Erzeugende der Evolventenfläche ist, lassen sich die Koordinaten $g^*$ und $h^*$ des Ortungspunktes der Schleifscheibe im Eingriffsfeld ableiten.

$$g^* = \frac{z}{\cos \gamma} \cdot \sin \beta_b \tag{7}$$

$$h^* = \frac{L_n}{\sin \beta} + \frac{W}{\tan \beta} - z \cdot \cos \beta - y \cdot \sin \alpha \cdot \sin \beta \tag{8}$$

$$g^* = L_n \cdot \frac{\cos \beta \cdot \cos \alpha}{\cos \gamma} + W \cdot \frac{\cos \alpha}{\cos \gamma} - H \cdot \frac{\sin \beta \cdot \cos \alpha}{\cos \gamma} \tag{11}$$

$$h^* = L_n \cdot \sin \beta \cdot \cos^2 \alpha - W \cdot \sin^2 \alpha \cdot \tan \beta + H \left[ \cos \beta + \frac{\sin^2 \alpha \cdot \sin^2 \beta}{\cos \beta} \right] \tag{12}$$

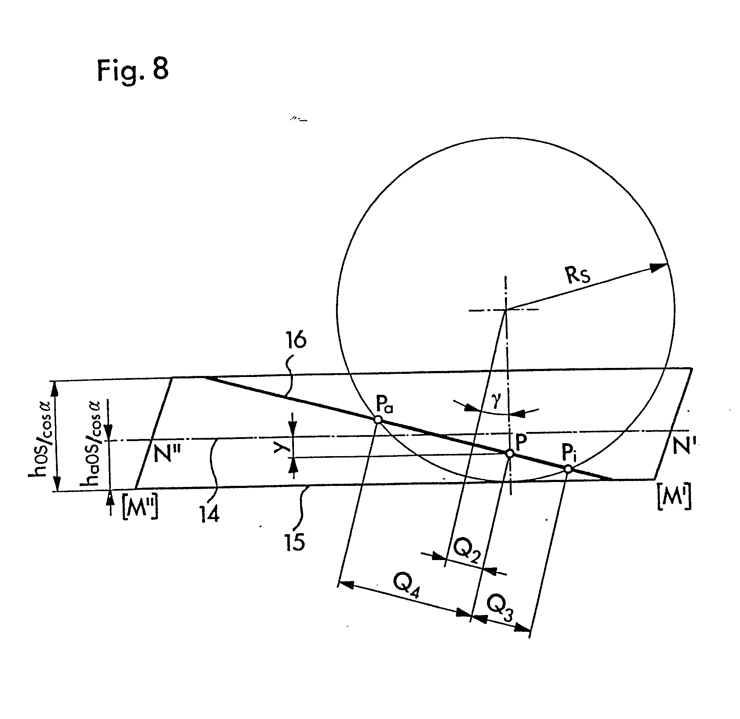

Die effektiven Schleifpunkte $p_a$ und $p_i$ auf der Werkzeug-Bezugs-Zahnstangenflanke sind in Fig. 8 skizziert.

Dabei ist die Werkzeug-Bezugsstangenflanke in der Zeichenebene dargestellt. Durch den Ortungspunkt P ist die Lage der Flankenberührungslinie und die Lage des Schleifscheibenrandes bestimmt. Wie man erkennt, sind durch diesen Schleifscheibenrand zwei Schleifpunkte auf der Flankenberührungslinie bestimmt, ein äusserer Schleifpunkt $P_a$ und ein innerer Schleifpunkt $P_i$.

Der Abstand des äusseren Schleifpunktes $P_a$ vom Ortungspunkt P liegt dabei auf der Flankenberührungslinie $Q_4$.

Der Abstand des inneren Schleifpunktes $P_i$ liegt seinerseits vom Ortungspunkt P auf der Flankenberührungslinie $Q_3$.

$$Q_4 = \sqrt{R_s^2 - \left(R_s - \frac{h_{aos}}{\cos \alpha} + y\right)^2 \cdot \cos^2 \gamma} + \left(R_s - \frac{h_{aos}}{\cos \alpha} + y\right) \cdot \sin \gamma \qquad (13)$$

wobei
$R_s$ = Radius des kreisförmigen Werkzeugrandes

$$y = \left(\frac{L_n}{\tan \beta} + \frac{W}{\sin \beta} - H\right) \tan \gamma$$

$$Q_3 = \sqrt{R_s^2 - \left(R_s - \frac{h_{aos}}{\cos \alpha} + y\right)^2 \cdot \cos^2 \gamma} - \left(R_s - \frac{h_{aos}}{\cos \alpha} + y\right) \cdot \sin \gamma \qquad (14)$$

In Fig. 8 ist der Schleifscheibenrand (wie oben erwähnt) im Umriss der Werkzeug-Bezugszahnstangenflanke dargestellt. Dabei sind für die Teillinie das Bezugszeichen 14 und für die Fusslinie das Bezugszeichen 15, für die Flankenberührungslinie das Bezugszeichen 16, verwendet. Der Radius des Schleifscheibenrandes der Tellerscheibe wird mit $R_s$, der äussere Schleifpunkt mit $P_a$ und der innere Schleifpunkt mit $P_i$ bezeichnet.

Die Bestimmung der Lage der Schleifpunkte im Eingriffsfeld ist folgendermassen vorzunehmen :

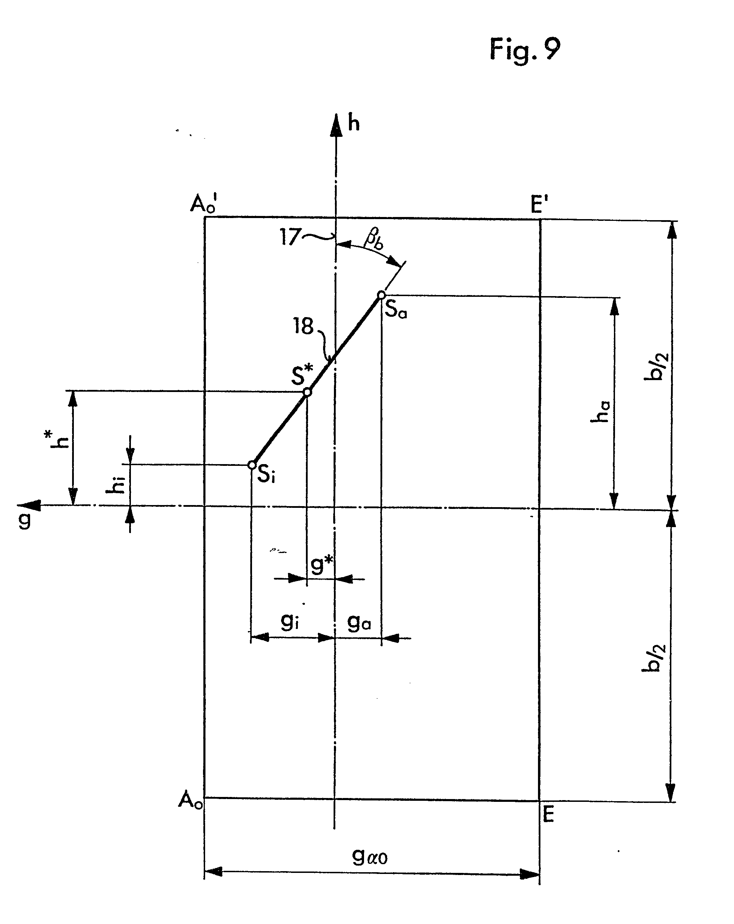

Da räumlich die Flankenberührungslinie mit einer Erzeugenden der Evolventenfläche übereinstimmt, kann man die Lage der Schleifpunkte $S_a$ und $S_i$ durch Bezugnahme auf den Ortungspunkt $S^*$ gemäss Fig. 9 bestimmen. Die Koordinaten der beiden Schleifpunkte im Eingriffsfeld sind :

$$S_a : g_a = g^* - Q_4 \cdot \sin\beta_b \qquad (15)$$
$$h_a = h^* + Q_4 \cdot \cos\beta_b \qquad (16)$$

$$S_i : g_i = g^* + Q_3 \cdot \sin\beta_b \qquad (17)$$
$$h_i = h^* - Q_3 \cdot \cos\beta_b \qquad (18)$$

Im dynamischen Vorgang des Schleifens kommen laufend Wälzwegwerte W und Schleifhubwerte H zur EDV-Auswertung, woraus paarweise Koordinatenwerte g und h für die beiden Schleifpunkte $S_a$ und $S_i$ (bei Tellerschleifscheiben) erhalten werden. Nach massgabe der ebenfalls mit dem Eingriffsfeld verbundenen Korrekturinstruktion läuft ein EDV-Entscheidungsverfahren, ob und welcher Korrekturbetrag über die Schleifscheibenachse ausgeführt werden soll. In der Regel wird dann eine Korrektur ausgeführt, wenn nur ein Schleifpunkt, und zwar der nachlaufende im Sinne des Durchfahrens des Eingriffsfeldes, zur Wirkung kommt. Da theoretisch jeder Schleifpunkt bei allen Eingriffsfeldpunkten vorbei kommt, ist die Korrekturmöglichkeit gesichert.

Beim Schleifen mit kegelförmiger Schleifscheibe fällt der Schleifpunkt — aufgrund dieser geometrischen Ueberlegung — mit dem Ortungspunkt P zusammen, d. h. die Beträge $Q_3$ und $Q_4$ werden gleich Null.

In Fig. 9 sind die beiden aktiven Schleifpunkte $S_a$ und $S_i$ im Erzeugungseingriffsfeld eingetragen, sowie die Flankenberührungslinie 18 mit der Werkzeugzahnstangenflanke und der Erzeugungswälzgeraden 17 dargestellt.

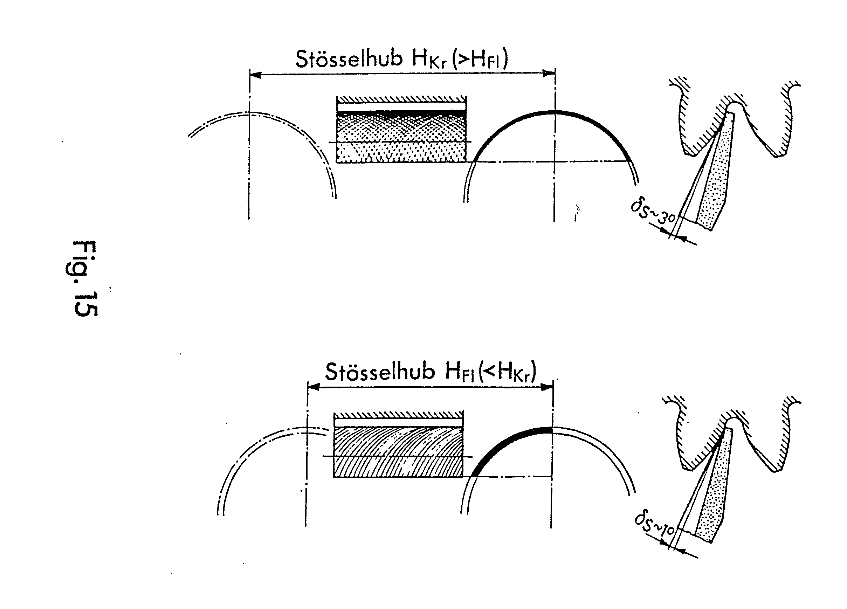

Eine Variante des Schleifverfahrens, wie es diesen geometrischen Ueberlegungen zugrunde liegt, stellt das sogenannte Flächenschliffverfahren (siehe auch Fig. 15) dar. Dabei arbeiten nur die vorderen Schleifscheibenränder, die durch Schwenken der Scheiben etwas näher an die Zahnflanken gebracht werden als die hinteren Ränder.

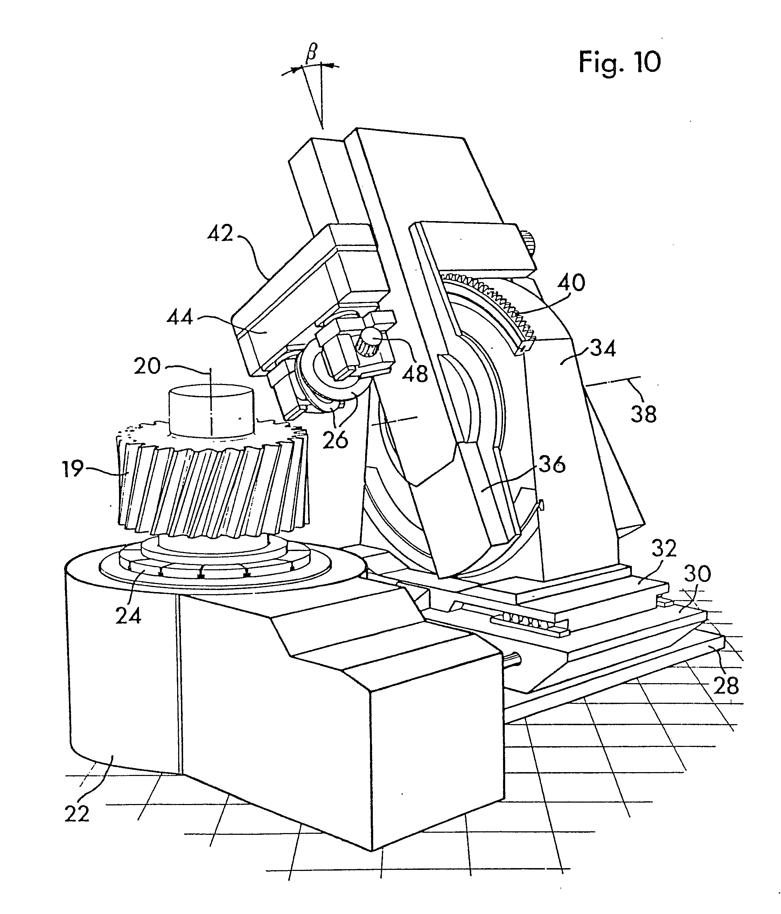

Die in Fig. 10 dargestellte Zahnradschleifmaschine ist zum Schleifen der Zahnflanken eines schrägverzahnten Rades 19 eingerichtet, dessen Achse 20 senkrecht angeordnet ist. Zu der Zahnradschleifmaschine gehört ein Sockel 22, in dem ein Rundtisch 24 um die senkrechte Achse 20 drehantreibbar gelagert ist. Das Rad 19 ist auf dem Rundtisch 24 aufgespannt und führt ausschliesslich die zum Teilwälzschleifen erforderlichen Drehbewegungen aus, nämlich Wälzdrehungen, an die sich jeweils nach dem Schleifen zweier Zahnflanken eine Teildrehung anschliesst. Alle übrigen Bewegungen, nämlich auf- und abwärtsgerichtete Hubbewegungen längs der Zahnflanken des Rades 19, sowie die zum Abwälzvorgang gehörenden geradlinigen Bewegungen tangential zum Rad 19, also quer zu dessen Achse, sowie Korrekturbewegungen werden von zwei Schleifscheiben 26 ausgeführt, die im dargestellten Beispiel für das MAAG 15°/20°-Verfahren eingestellt sind. Für die erforderlichen Bewegungen der beiden Schleifscheiben 26 weist die Maschine folgende Baugruppen auf :

5

Auf einem Maschinenbett 28 ist ein Bettschlitten 30 radial zum Rad 19 einstellbar geführt. Auf dem Bettschliten 30 ist ein Ständerschlitten 32 tangential zum Rad 19 verschiebbar geführt, um den Schleifscheiben 26 die geradlinig hin- und hergehenden Komponenten der Wälzbewegung zu erteilen. Auf dem Ständerschlitten 32 ist ein Ständer 34 befestigt, an dem eine Schwenkführung 36 um eine zum Rad 19 normale, waagerechte Achse 38 schwenkeinstellbar gelagert ist. Zum Schwenken und Feststellen der Schwenkführung 36 ist am Ständer 34 ein aussenverzahntes Ringsegment 40 angeordnet. Die Schwenkführung 36 ist gemäss Fig. 10 gegen die Senkrechte um den Schrägungswinkel β der Verzahnung des Rades 19 geneigt.

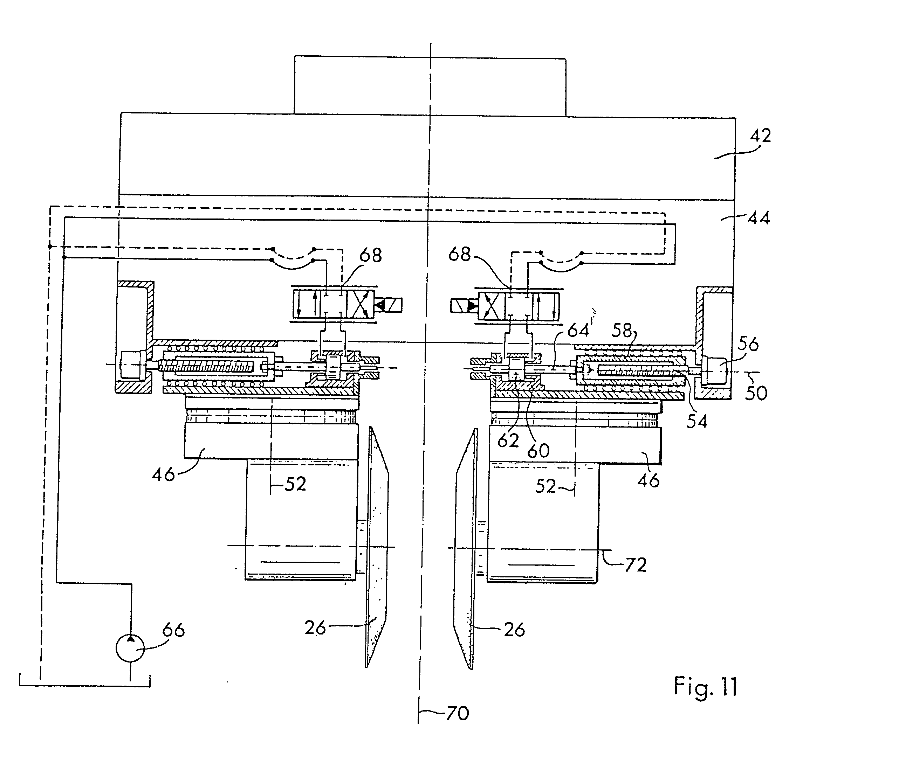

Längs der Schwenkführung 36 ist eine Querführung 42 hubweise auf- und abbewegbar. An der Querführung 42 ist ein Querschlitten 44 geführt, der zwei Schleifsupporte 46 trägt. An jedem Schleifsupport 46 ist eine der Schleifscheiben 26 drehantreibbar gelagert ; ein Antriebsmotor 48 für die in Fig. 10 und 11 rechte Schleifscheibe 26 ist in Fig. 10 erkennbar.

Jeder der Schleifsupporte 46 (Fig. 11) ist in bezug auf den Querschlitten 44 in Richtung der Achse 50 der Gewindespindel 54 verschiebbar. Ausserdem sind beide Schleifsupporte 46 um je eine, zur Schwenkführung 36 parallele Achse 52 winkeleinstellbar zur Anpassung an unterschiedliche Eingriffswinkel.

Zum Verschieben längs der Achse 50 der zugehörigen Schleifscheibe 26 ist jedem Schleifsupport 46 eine Gewindespindel 54 zugeordnet, die im Querschlitten 44 in bezug auf diesen axial unverschiebbar gelagert und von einem Motor 56 antreibbar ist. Jede der gewindespindeln 54 ist in ein Mutterteil 58 eingeschraubt, das in bezug auf den zugehörigen Schleifsupport 46 parallel zur Achse 50 verschiebbar geführt ist. An jedem Schleifsupport 46 ist ein doppeltwirkender hydraulischer Zylinder 60 befestigt, in dem ein Kolben 62 arbeitet. Die Achse des Zylinders 60 fluchtet mit derjenigen der zugehörigen Gewindespindel 54. Der Kolben 62 ist mit dem Mutterteil 58 durch eine Kolbenstange 64 verbunden.

Die beiden Zylinder 60 werden von einer gemeinsamen Pumpe 66 über je ein Drestellungsventil 68 mit Oel versorgt ; in der abgebildeten Mittelstellung dieser Ventile sind in jedem der beiden Zylinder 60 die beiderseits des zugehörigen Kolbens 62 ausgebildeten Zylinderräume von der unmittelbaren Verbindung mit der Pumpe 66 abgeschnitten.

Als Symmetrieachse für die beiden Schleifsupporte 46 wird das Bezugszeichen 70 verwendet. Eine Variante der Vorrichtung sieht vor, die Schleifscheiben 26 bezüglich ihrer Schleifspindelachsen 72 zu verschieben.

Die beiden Schleifscheiben 26 arbeiten bei der dargestellten Anordnung mit ihren voneinander abgewandten, im wesentlichen ebenen Randflächen. Jeder der beiden Schleifscheiben 26 werden die normalen Zustellbewegungen vom zugehörigen Motor 56 über die Spindel 54, das Mutterteil 58, die Kolbenstange 64 und den Zylinder 60 erteilt, ohne dass sich der Kolben 62 im Zylinder bewegt. Die für Profil- und/oder Längskorrekturen erforderlichen Korrekturbewegungen werden jeder Schleifscheibe 26 dagegen dadurch erteilt, dass der zugehörige Zylinder 60 auf der einen oder anderen Seite seines Kolbens 62 mit Oel versorgt wird.

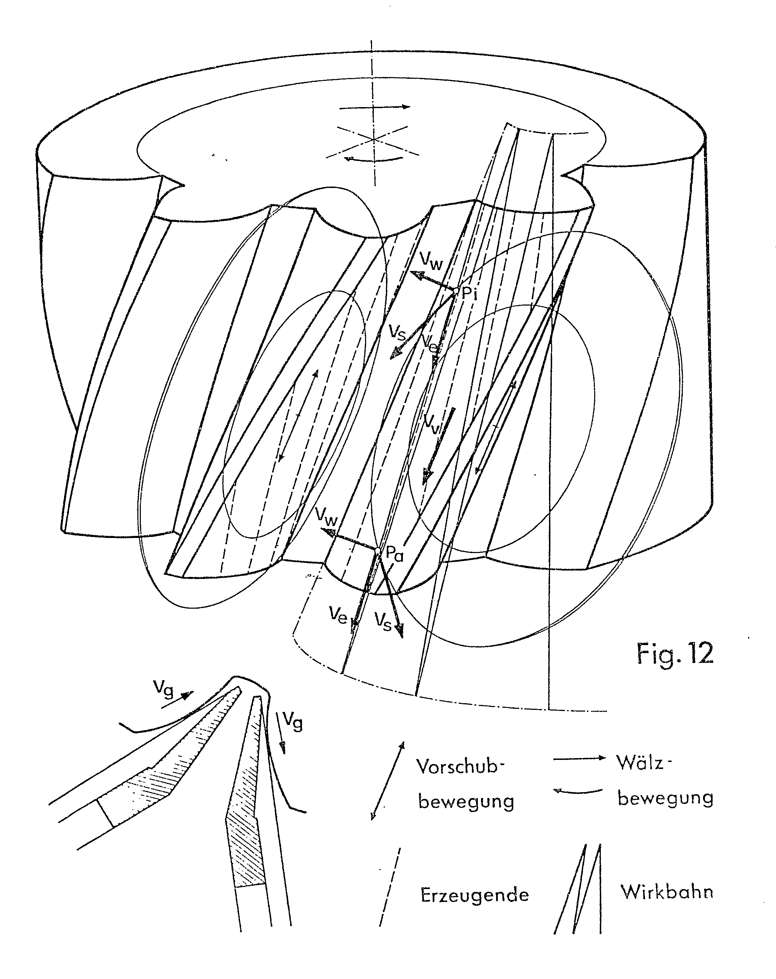

Beim 15°/20°-Verfahren von MAAG (siehe auch Seite 11) sind die Eingriffsverhältnisse zwischen Schleifscheibe und Zahnflanke sehr komplex. Die Verhältnisse sind daher in einer eigenen Figur (Fig. 12) gesondert herausskizziert. Die Wälzbewegung wird dabei in eine rotatorische und eine translatorische Komponente zerlegt. Die Rotation wird bestimmt durch ein Teilrad mit einer Schnecke, die Translation durch die Modulspindel (siehe Fig. 10). Beide Antriebe sind zur Erzeugung des gewünschten Moduls und der gewünschten Zähnezahl über Wechselräder verbunden. Der Schleifvorschub wird über einen Stössel bewerkstelligt, der sich in einem Drehteil auf und abbewegt. Dieses Drehteil ist dem zu schleifenden Schrägewinkel entsprechend geneigt.

Ohne Wälzbewegung fallen die Wirkbahnen der geometrischen Schleifpunkte mit den Erzeugenden zusammen, wobei zu beachten ist, dass die tellerförmige Schleifscheibe die Erzeugende jeweils in zwei Punkten berührt.

Bei stillstehender Stösselbewegung, jedoch bei eingeschalteter Wälzung, verschieben sich die geometrischen Schleifpunkte entlang dem äusseren Rand der Tellerscheiben.

Beim 15°/20°-Schleifverfahren von MAAG wird damit die Lage der geometrischen Schleifpunkte im Stirnschnitt (entlang der Evolvente) und im Schnitt der Zahnflanke mit einem zum Radkörper co-axialen Zylinder (entlang der Flankenlinie) erfindungsgemäss sowohl von der Wälzbewegung wie auch gleichzeitig von der Hubbewegung bestimmt.

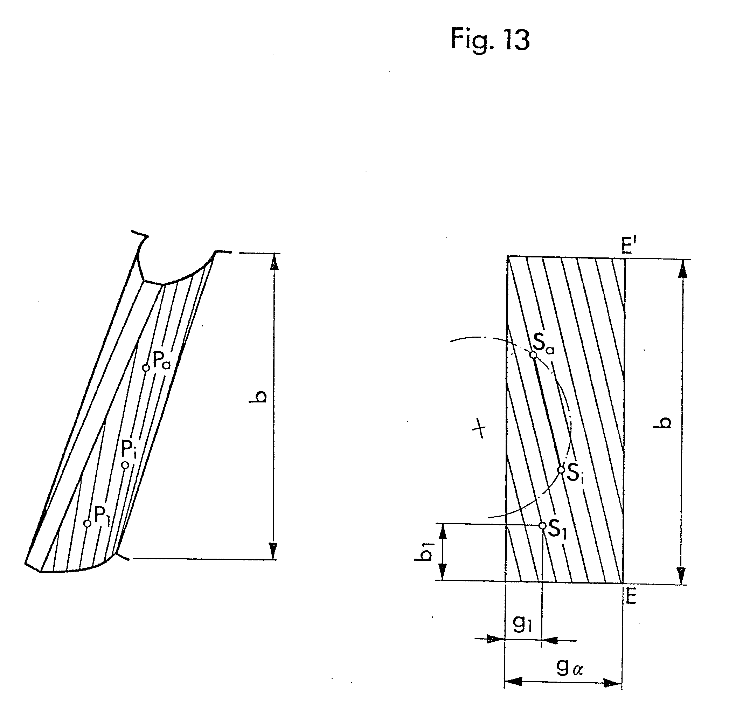

Die geometrischen Schleifpunkte sind, wie vorgehend ausführlich diskutiert, im Eingriffsfelddiagramm (siehe Fig. 13), d. h. im Koordinatensystem Radbreite b/Eingriffsstrecke $g\alpha$ (Wälzweg oder Rollwinkel) und andererseits im Koordinatensystem der Schleifmaschine, gebildet durch Schleifhubstellung H und Wälzwegstellung W definiert. In diesem Eingriffsfelddiagramm ist links eine Zahnflanke dargestellt, bei der die Erzeugenden und die beiden geometrischen Schleifpunkte $P_a$ und $P_i$ angegeben sind, in denen die Schleifscheibe in einer bestimmten Schleifhubstellung und einer bestimmten Wälzwegstellung die Evolventenflanke berührt. Rechts ist das gleiche Bild dargestellt, jedoch in einem rechtwinkligen Koordinatensystem $g_\alpha$/b.

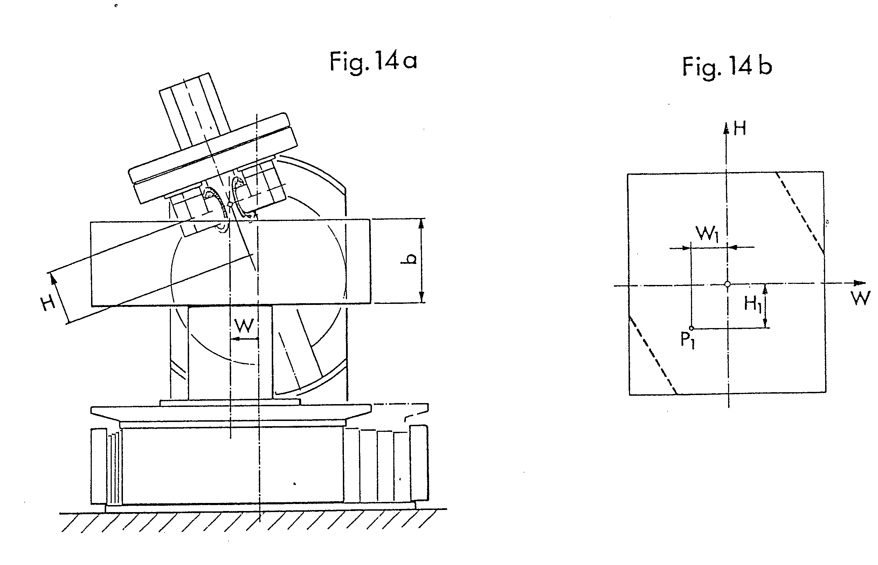

In Fig. 14a und Fig. 14b sind die gleichen Verhältnisse im Koordinatensystem der Schleifmaschine Wälzweg W/Schleifhub H (Fig. 14a) dargestellt. Zwischen den beiden Koordinatensystemen $g_\alpha$/b und W/H bestehen eindeutige geometrische Beziehungen.

Wichtig ist, dass sowohl der Wert $b_1$ wie auch der Wert $g_1$ eines Punktes $P_1$ im Eingriffsfelddiagramm gleichzeitig von den Werten $W_1$ und $H_1$ im Maschinenkoordinatenfeld abhängig sind.

Beim Flächenschliff (siehe Fig. 15), dem Schleifen mit der « halben Sehne » gibt es nur einen einzigen geometrischen Schleifpunkt, was die mathematische Behandlung grundsätzlich etwas vereinfacht. Andererseits besteht mit dem Flächenschliff eine eindeutige Zuordnung von Bezugspunkt im Eingriffsfeld zum Bearbeitungspunkt auf der Zahnflanke.

## Kurzzeichenliste

$b$ = Zahnbreite des zu bearbeitenden Rades 2, bzw. 19

$b_1$ = Abstand eines beliebigen Schleifpunktes $S_1$ im Eingriffsfeld bezüglich der unteren Stirnseite durch Punkt E

$g$ = Koordinatenachse für die Eingriffsstrecke eines beliebigen Schleifpunktes $S$ vom Wälzpunkt aus gegen den Zahnfuss gemessen

$g_1$ = Zahnfusseingriffsstrecke eines beliebigen Schleifpunktes $S_1$ im Eingriffsfeld

$g_a$ = Kopfeingriffsstrecke eines äusseren Schleifpunktes $S_a$ im Eingriffsfeld

$g_{aO}$ = Kopfeingriffsstrecke der Werkzeug-Bezugszahnstange bezüglich der Erzeugungs-Wälzachse $WW'$ im Erzeugungseingriffsfeld

$g_{a1}$ = Kopfeingriffsstrecke des Ritzels 1

$g_{a2}$ = Kopfeingriffsstrecke des Rades 2, bzw. 19

$g_i$ = Fusseingriffsstrecke eines inneren Schleifpunktes $S_i$ im Eingriffsfeld

$g^*$ = Koordinate des Ortungspunktes der Schleifscheibe im Eingriffsfeld

$g_\alpha$ = Gesamteingriffsstrecke

$g_{\alpha O}$ = Gesamteingriffsstrecke im Erzeugungs-Eingriffsfeld

$h$ = Abstand eines beliebigen Schleifpunktes $S$ von der Koordinatenachse $g$ durch $W_o$

$h_a$ = Abstand eines äusseren Schleifpunktes $S_a$ — im Eingriffsfeld — von der Koordinatenachse $g$

$h_{aOS}$ = Zahnkopfhöhe eines Werkzeugs

$h_{OS}$ = Aktive Werkzeugzahnhöhe — bezüglich des Schleifens der Verzahnung

$h_i$ = Abstand eines inneren Schleifpunktes $S_i$ — im Eingriffsfeld — von der Koordinatenachse $g$

$h^*$ = Abstand eines Ortungspunktes $S^*$ der Schleifscheibe im Eingriffsfeld von der Koordinatenachse $g$

$r$ = Teilkreisradius des Rades 2 bzw. 19

$r_{a1}$ = Kopfkreisradius des Ritzels 1

$r_{a2}$ = Kopfkreisradius des Rades 2 bzw. 19

$r_b$ = Grundkreisradius des Rades

$r_{b1}$ = Grundkreisradius des Ritzels 1

$r_{b2}$ = Grundkreisradius des Ritzels 2

$v_e$ = Geschwindigkeit des Schleifpunktes in Richtung der Flankenberührungslinie

$v_g$ = Relativgeschwindigkeit des Schleifpunktes auf der Zahnflanke

$v_s$ = Geschwindigkeit des Schleifscheibenrandes

$v_v$ = Hubgeschwindigkeit

$v_w$ = Geschwindigkeit des Schleifpunktes senkrecht zur Flankenberührungslinie

$y$ = Abstand des Ortungspunktes p von der Bezugslinie N'N'' auf der Werkzeugzahnstangenflanke

$z$ = Projektion der Strecke P C auf die Bezugslinie N'N''

$\alpha$ = Eingriffswinkel

$\beta$ = Zahnschrägungswinkel

$\beta_b$ = Grundschrägungswinkel

$\gamma$ = Winkel zwischen Flankenberührungs- und Fusslinie

$\delta_s$ = Hinterdrehwinkel der Schleifscheibe

$A$ = Zahnkopfpunkt des Rades auf der Eingriffsstrecke

$A'$ = Entsprechender Punkt zu A in der gegenüberliegenden Stirnebene

$A_O$ = Zahnkopfpunkt der Werkzeug-Bezugszahnstange auf der Eingriffsstrecke

$A'_O$ = Entsprechender Punkt zu $A_O$ in der gegenüberliegenden Stirnebene

$C$ = Wälzpunkt auf der Eingriffsstrecke

$C$ = Schnittpunkt der Flankenberührungslinie mit der Bezugslinie N'N'' für einen beliebigen Wälzpunkt W (Fig. 7)

$C'$ = Entsprechender Punkt zu C in der gegenüberliegenden Stirnebene

$C_O$ = Schnittpunkt der Flankenberührungslinie mit der Bezugslinie N'N'' für den Wälzweg W = Null

$E$ = Zahnkopfpunkt des Ritzels auf der Eingriffsstrecke

$E'$ = Entsprechender Punkt zu E in der gegenüberliegenden Stirnebene

$H$ = Werkzeughub

$H_1$ = Werkzeughub in einem bestimmten Zeitpunkt

$H_{F1}$ = Werkzeughub beim Flächenschliff

$H_{Kr}$ = Werkzeughub beim Kreuzschliff

$L$ = Flankenberührungslinie zwischen Werkzeugflanke und Rad

$L_n$ = halbe Zahnlückenweite

M = Bezugspunkt für die Schleifscheibe im Wälzweg W-Schleifhub H-Diagramm

M′ = Schnittpunkt der Fusslinie der Werkzeugbezugszahnstangenflanke mit der unteren Stirnfläche — im Aufriss

M″ = Schnittpunkt der Fusslinie der Werkzeugbezugszahnstangenflanke mit der oberen Stirnfläche — im Aufriss

$M_O$ = Symmetriepunkt

[M′] = Umklappung von M′ in die Aufrissebene

[M″] = Umklappung von M″ in die Aufrissebene

N′ = Schnittpunkt der Berzugslinie der Werkzeugbezugszahnstangenflanke mit der unteren Stirnfläche

N″ = Schnittpunkt der Bezugslinie der Werkzeugbezugszahnstangenflanke mit der oberen Stirnfläche

P = Ortungspunkt für den Schleifscheibenrand auf der Werkzeugbezugszahnstangenflanke in beliebiger Wälz- und Schleifhubstellung

$P_O$ = Ortungspunkt für den Schleifscheibenrand in Nullstellung von Wälzweg und Schleifhub

$P_1$ = beliebiger Punkt auf der Erzeugungslinie der Zahnflanke

$P_a$ = Effektiver Schleifpunkt — aussen

$P_i$ = Effektiver Schleifpunkt — innen

$Q_1$ = Hilfsgrösse in Fig. 7

$Q_2$ = Differenz zwischen $Q_3$ und $Q_4$

$Q_3$ = Teilabstand auf der Schleifsehnevom Ortungspunkt P zum inneren Schnittpunkt $P_i$ des Schleifscheibenrandes

$Q_4$ = Teilabstand auf der Schleifsehne vom Ortungspunkt P Zum äusseren Schnittpunkt $P_a$ des Schleifscheibenrandes

$R_S$ = Radius des kreisförmigen Werkzeugrandes

S = beliebiger Schleifpunkt im Erzeugungs-Eingriffsfeld

$S_1$ = beliebiger Schleifpunkt im Eingriffsfeld

$S_a$ = äusserer Schleifpunkt im Eingriffsfeld

$S_i$ = innerer Schleifpunkt im Eingriffsfeld

$S^*$ = Ortungspunkt für den Schleifscheibenrand im Erzeugungseingriffsfeld

[T] = Schnittpunkt der Flankenberührungslinie mit der Zahnfusslinie der Werkzeugzahnstangenflanke für einen beliebiegen Wälzweg W — in der Umklappung

$T_O$ = Schnittpunkt der Flankenberührungslinie mit der Zahnfusslinie der Werkzeugzahnstangenflanke für den Wälzweg W = Null

W = Wälzweg ; Schnittpunkt der Erzeugungswälzachse im Eingriffsfeld mit der unteren Stirnfläche

W′ = Schnittpunkt der Erzeugungswälzachse im Eingriffsfeld mit der oberen Stirnfläche

$W_O$ = Koordinaten-Nullpunkt für g- und h- Koordinatenachsen

$W_1$ = Wälzweg — in einem ganz bestimmten Zeitpunkt

$X_\theta$ = Projektion der Strecke $[P_O]$ $C_O$ für den Wälzweg W = Null auf die Bezugslinie N′N″

## Patentansprüche

1. Wälzverfahren zur spangebenden Bearbeitung evolventenförmiger Zahnflanken mit Profil- und Längskorrekturen auf einer Maschine mit einem oder zwei Werkzeugen, die teller-, kegel- oder doppelkegelförmig ausgebildet, längs der Zahnflanken hubweise hin- und herbewegbar, sowie in Richtung der Zahnflanken zustellbar sind und an einer oder zwei Arbeitsstellen auf je eine Zahnflanke einwirken, wobei die korrekturen für jede Arbeitsstelle in einem koordinatenfeld der Verzahnung abhängig von der Wälzstellung und der Hubstellung der Werkzeugmaschine vorgegeben werden, dadurch gekennzeichnet, dass die zur Erzeugung der Profil- und Längskorrekturen erforderliche Verschiebung des bzw. jedes Werkzeuges für jede Arbeitsstelle ($S_a$ und $S_i$, Koordinaten $g_a$, $h_a$, $g_i$ $h_i$) im Eingriffsfeld der Verzahnung nach folgenden Formeln gesteuert wird :

$$S_a : g_a = g^* - Q_4 \cdot \sin\beta_b$$
$$h_a = h^* + Q_4 \cdot \cos\beta_b$$

$$S_i : g_i = g^* + Q_3 \cdot \sin\beta_b$$
$$h_i = h^* - Q_3 \cdot \cos\beta_b$$

wobei

$$g^* = L_n \cdot \frac{\cos\beta \cdot \cos\alpha}{\cos\gamma} + W \cdot \frac{\cos\alpha}{\cos\gamma} - H \cdot \frac{\sin\beta \cdot \cos\alpha}{\cos\gamma}$$

$$h^* = L_n \cdot \sin\beta \cdot \cos^2\alpha - W \cdot \sin^2\alpha \cdot \tan\beta + H \cos\beta + \frac{\sin^2\alpha \cdot \sin^2\beta}{\cos\beta}$$

$$Q_4 = \sqrt{R_s^2 - \left(R_s - \frac{h_{aos}}{\cos\alpha} + y\right)^2 \cdot \cos^2\gamma} + \left(R_s - \frac{h_{aos}}{\cos\alpha} + y\right) \cdot \sin\gamma$$

$R_s$ = Radius des kreisförmigen Werkzeugrandes

$$y = \left(\frac{L_n}{\tan \beta} + \frac{W}{\sin \beta} - H\right) \tan \gamma$$

$$Q_3 = \sqrt{R_s^2 - \left(R_s - \frac{h_{aos}}{\cos \alpha} + y\right)^2 \cdot \cos^2 \gamma} - \left(R_s - \frac{h_{aos}}{\cos \alpha} + y\right) \cdot \sin \gamma$$

$H$ = Werkzeughub
$L_n$ = halbe Zahnlückenweite
$W$ = Wälzweg
$h_{aos}$ = Zahnkopfhöhe des Werkzeugs
$\alpha$ = Eingrifswinkel
$\beta$ = Zahnschrägungswinkel
$\gamma$ = Winkel zwischen Flankenberührungs- und Fusslinie

2. Verfahren nach Anspruch 1, dadurch gekennzeichnet, dass die Verschiebung des bzw. jedes Werkzeugs für die Profil- und/oder Längskorrekturen in einer Horizontalebene senkrecht zur Wälzrichtung erfolgt.

3. Verfahren nach Anspruch 1, dadurch gekennzeichnet, dass die Verschiebung des bzw. jedes Werkzeugs für die Profil- und/oder Längskorrekturen senkrecht zur Hubrichtung und in einer zur Wälzrichtung parallelen Vertikalebene erfolgt.

4. Verfahren nach Anspruch 1, dadurch gekennzeichnet, dass die Verschiebung des bzw. jedes Werkzeuges für die Profil- und/oder Längskorrekturen in Richtung der Achse einer Schleifspindel (72) erfolgt.

5. Verfahren nach Anspruch 1, dadurch gekennzeichnet, dass beim Arbeiten mit zwei Werkzeugen im Flächeneingriff jeweils nur eine der beiden Arbeitsstellen ($S_a$ oder $S_i$) zum Eingriff kommt.

## Claims

1. A generating method for the machining of involute-shaped flanks of teeth with profile and longitudinal corrections on a machine with one or two tools which are dish-shaped, tapered or double-taper-shaped in construction, are reciprocable in strokes along the flanks of the teeth, and can be fed in, in the direction of the flanks of the teeth and each act on one flank of a tooth at one or two working points, the corrections for each working point being preset in a coordinate field of the teeth depending on the generating position and the stroke position of the machine tool, characterised in that the displacement of the tool or of each tool necessary to produce the profile and longitudinal corrections for each working point ($S_a$ and $S_i$, coordinates $g_1$, $h_a$, $g_i$, $h_i$) in the field of contact of the teeth is controlled in accordance with the following formulae :

$$S_a : g_a = g^* - Q_4 \cdot \sin\beta_b$$
$$h_a = h^* + Q_4 \cdot \cos\beta_b$$

$$S_i : g_i = g^* + Q_3 \cdot \sin\beta_b$$
$$h_i = h^* - Q_3 \cdot \cos\beta_b$$

wherein

$$g^* = L_n \cdot \frac{\cos \beta \cdot \cos \alpha}{\cos \gamma} + W \cdot \frac{\cos \alpha}{\cos \gamma} - H \cdot \frac{\sin \beta \cdot \cos \alpha}{\cos \gamma}$$

$$h^* = L_n \cdot \sin \beta \cdot \cos^2 \alpha - W \cdot \sin^2 \alpha \cdot \tan \beta + H\left[\cos \beta + \frac{\sin^2 \alpha \cdot \sin^2 \beta}{\cos \beta}\right]$$

$$Q_4 = \sqrt{R_s^2 - \left(R_s - \frac{h_{aos}}{\cos \alpha} + y\right)^2 \cdot \cos^2 \gamma} + \left(R_s - \frac{h_{aos}}{\cos \alpha} + y\right) \cdot \sin \gamma$$

$R_s$ = radius of the circular edge of the tool

$$y = \left(\frac{L_n}{\tan \beta} + \frac{W}{\sin \beta} - H\right) \tan \gamma$$

$$Q_3 = \sqrt{R_s^2 - \left(R_s - \frac{h_{aos}}{\cos \alpha} + y\right)^2 \cdot \cos^2 \gamma} - \left(R_s - \frac{h_{aos}}{\cos \alpha} + y\right) \cdot \sin \gamma$$

H = tool stroke
$L_n$ = half the tooth space width
W = generating path
$h_{aos}$ = addendum of the tool
$\alpha$ = pressure angle
$\beta$ = helix angle of tooth
$\gamma$ = angle between flank contact line and root line.

2. A method as claimed in Claim 1, characterised in that the displacement of the or of each tool for the profile and/or longitudinal corrections is effected in a horizontal plane perpendicular to the generating direction.

3. A method as claimed in Claim 1, characterised in that the displacement of the or of each tool for the profile and/or longitudinal corrections is effected perpendicular to the direction of stroke and in a vertical plane parallel to the generating direction.

4. A method as claimed in Claim 1, characterised in that the displacement of the or of each tool for the profile and/or longitudinal corrections is effected in the direction of the axis of a grinding spindle (72).

5. A method as claimed in Claim 1, characterised in that when two tools work in area engagement, only one of the two working points ($S_a$ or $S_i$) comes into engagement at a time.

**Revendications**

1. Procédé de génération pour l'usinage par enlèvement de copeaux de flancs de denture en développante, avec corrections sur le profil et sur la longueur, sur une machine comprenant un ou deux outils, en forme d'assiette, de cône ou de double cône, qui sont mobiles en translation alternative, dans le sens de l'avance, le long des flancs des dents, de même qu'ils sont réglables en direction des flancs des dents et qui agissent chacun sur un flanc de dent, en un ou deux points de travail, les corrections pour chaque point de travail contenu dans une zone de coordonnées de la denture étant prédéterminées en fonction de la position de génération et de la position d'avance de la machine-outil, caractérisé en ce que la translation de l'outil ou de chaque outil qui est nécessaire pour la production des corrections sur le profil ou sur la longueur, est déterminée pour chaque point de travail ($S_a$ et $S_i$, coordonnées $g_a$, $h_a$, $g_i$, $h_i$) dans la zone d'engrènement de la denture, conformément aux formules suivantes :

$$Sa : g_a = g^* - Q_4 \cdot \sin\beta_b$$
$$h_a = h^* + Q_4 \cdot \cos\beta_b$$

$$Si : g_i = g^* + Q_3 \cdot \sin\beta_b$$
$$h_i = h^* - Q_3 \cdot \cos\beta_b$$

où

$$g^* = L_n \cdot \frac{\cos \beta \cdot \cos \alpha}{\cos \gamma} + W \cdot \frac{\cos \alpha}{\cos \gamma} - H \cdot \frac{\sin \beta \cdot \cos \alpha}{\cos \gamma}$$

$$h^* = L_n \cdot \sin \beta \cdot \cos^2 \alpha - W \cdot \sin^2 \alpha \cdot \text{tg } \beta + H \left[ \cos \beta + \frac{\sin^2 \alpha \cdot \sin^2 \beta}{\cos \beta} \right]$$

$$Q_4 = \sqrt{R_s^2 - \left( R_s \frac{h_{aos}}{\cos \alpha} + y \right)^2 \cdot \cos^2 \gamma} + \left( R_3 - \frac{h_{aos}}{\cos \alpha} + y \right) \cdot \sin \gamma$$

$R_s$ = rayon du bord circulaire de l'outil

$$y = \left( \frac{L_n}{\text{tg } \beta} + \frac{W}{\sin \beta} - H \right) \text{tg } \gamma$$

$$Q_3 = \sqrt{R_s^2 - \left( R_s - \frac{h_{aos}}{\cos \alpha} + y \right)^2 \cdot \cos^2 \gamma} - \left( R_s - \frac{h_{aos}}{\cos \alpha} + y \right) \cdot \sin \gamma$$

H = course d'avance de l'outil,
$L_n$ = demi-largeur d'entredent,
W = distance de génération,
$h_{aos}$ = hauteur des sommets de dent de l'outil,
$\alpha$ = angle de pression,
$\beta$ = angle d'obliquité des dents,
$\gamma$ = angle entre la ligne de contact entre flancs et la ligne de pied.

2. Procédé suivant la revendication 1, caractérisé en ce que le mouvement de translation décrit par l'outil ou par chaque outil pour l'exécution des corrections sur le profil et/ou sur la longueur s'effectue dans un plan horizontal, perpendiculairement à la direction de génération.

3. Procédé suivant la revendication 1, caractérisé en ce que le mouvement de translation de l'outil ou de chaque outil pour l'exécution des corrections sur le profil et/ou sur la longueur s'effectue perpendiculairement à la direction de la course d'avance et dans un plan vertical parallèle à la direction du mouvement de génération.

4. Procédé suivant la revendication 1, caractérisé en ce que le mouvement de translation de l'outil ou de chaque outil pour l'exécution des corrections sur le profil et/ou sur la longueur est parallèle à l'axe d'une broche porte-meule (72).

5. Procédé suivant la revendication 1, caractérisé en ce que, lors d'un travail avec deux outils en attaque de surface, à chaque instant, seule l'une des deux zones de travail ($S_a$ ou $S_i$) est en prise.

# 0 074 930

## Fig. 1

Fig. 2

Fig. 3

# Fig. 4

Fig. 5

Fig. 6

Fig. 7

Fig. 8

Fig. 9

Fig. 10

Fig. 11

0 074 930

## 0 074 930

Fig. 12

Vorschubbewegung

Wälzbewegung

Erzeugende

Wirkbahn

# Fig. 13

Fig. 14 b

Fig. 14 a

Fig. 15